# EUROPÄISCHE PATENTSCHRIFT

(11) **EP 0 531 745 B1**
(45) Veröffentlichungstag und Bekanntmachung des Hinweises auf die Patenterteilung: **18.09.1996**
(21) Anmeldenummer: 92113944.0
(22) Anmeldetag: 17.08.1992
(51) Int. Cl.: G01N 27/416

(54) **Elektrochemischer Sensor**
Electrochemical sensor
Capteur électrochimique

(30) Priorität: 28.08.1991 DE 4128494
(43) Veröffentlichungstag der Anmeldung: 17.03.1993
(73) Patentinhaber: HONEYWELL AG, D-63067 Offenbach am Main (DE)
(72) Erfinder: Deprez, Jacques, W-5020 Frechen (DE); Pfenning, Dirk-Michael, Dr., 51381 Leverkusen (DE); Boscher, Jörg, Dr., W-2300 Kiel 14 (DE)
(74) Vertreter: Rentzsch, Heinz, Dipl.-Ing.

(56) Entgegenhaltungen:
- EP-A- 0 064 337
- DE-A- 2 436 261
- DE-A- 2 621 676
- US-A- 3 957 611

## Beschreibung

Die Erfindung geht aus von einem elektrochemischen Zweielektrodensensor mit einer organischen Gel-Elektrolyt-Meßzelle für gasförmige Meßkomponenten und einem vorgeschalteten, für die Meßkomponenten durchlässigen Filter. Elektrochemische Sensoren werden heute in großem Umfang zum empfindlichen Nachweis von bestimmten, häufig toxischen oder umweltbelastenden Gasen eingesetzt. In typischen Gaswarngeräten auf der Basis elektrochemischer Sensoren wird bei Überschreitung einer Schwellwertkonzentration ein Alarm ausgelöst.

Der Meßeffekt beruht darauf, daß die zu messende Gaskomponente an eine mit dem Gasraum und dem Elektrolyt in Verbindung stehende Meßelektrode diffundiert und dort eine elektrochemische Reaktion hervorruft, die in einem äußeren Schließungskreis einen meßbaren elektrischen Strom erzeugt. Dieses Sensorsignal kann elektronisch verstärkt und dann zur Anzeige gebracht bzw. mit einem vorgegebenen Schwellwert verglichen werden, um z.B. einen akustischen oder optischen Alarm auszulösen. Typische elektrochemische Gassensoren sind z.B. beschrieben in DE 2 436 261, EP 64 337 und US 4 810 352.

Bei den meisten Anwendungsfällen wird eine möglichst selektive Erfassung einer einzigen Meßgaskomponente angestrebt. Da elektrochemische Sensoren in der Regel eine ausgeprägte Querempfindlichkeit gegenüber anderen Gasen zeigen, werden der eigentlichen Meßzelle Filter bzw. Filterkombinationen vorgeschaltet, die nur für die zu untersuchende Meßkomponente durchlässig sind (siehe z.B. DE 2 621 676). Sollen dagegen mit Hilfe einer einzigen elektrochemischen Meßzelle mehrere Gaskomponenten erfaßt und detektiert werden, so tritt das Problem auf, daß sowohl die Empfindlichkeit als auch die Ansprechzeit (Response Time) der Meßzelle für die einzelnen Gaskomponenten unterschiedlich sind. Hier setzt die Erfindung an.

Es lag die Aufgabe zugrunde, einen zum Nachweis von Phosgen und Blausäure gleichermaßen geeigneten Zweielektrodensensor zu entwickeln, der trotz der unterschiedlichen Meßzellencharakteristik (Empfindlichkeit und Ansprechzeit) in Gefahrensituationen, z.B. bei Gasausbrüchen in chemischen Betrieben oder in chemischen Labors, eine sichere und schnelle Detektion von toxischen Konzentrationen dieser beiden Gase ermöglicht, ohne das Gerät umzuschalten bzw. jeweils für die betreffende Gaskomponente spezifische Einstellungen vorzunehmen,

Diese Aufgabe wird erfindungsgemäß dadurch gelöst,
a) daß eine elektrochemische Meßzelle verwendet wird, die bei Einwirkung von mindestens 2 ppm Phosgen oder mindestens 15 ppm Blausäure ein Signal von mindestens 50 nA erzeugt,
b) daß eine Blende die wirksame Elektrodenoberfläche an der Dreiphasengrenze Gasraum/Meßelektrode/Elektrolyt begrenzt und
c) daß der Blende eine aus einer porösen Folie bestehende Konvektionsbarriere und ein als Filter dienendes Silbersieb vorgeschaltet sind, so daß die Meßkomponenten zuerst durch das Silbersieb und dann durch die Konvektionsbarriere und die Blende zu der Dreiphasengrenze diffundieren.

Aufgrund dieser kombinierten Maßnahmen kann man erreichen, daß sowohl die Empfindlichkeit als auch die Ansprechzeit des Sensors für Phosgen und Blausäure näherungsweise übereinstimmen oder zumindest in der gleichen Größenordnung liegen. Damit werden die Voraussetzungen für ein Warngerät mit einheitlichem Aufbau und einheitlicher elektronischer Signalverarbeitung zur Detektion gefährlicher Konzentrationen dieser beiden Gase geschaffen, Insbesondere kann man durch eine geeignete Abstimmung der Porosität und Dicke der Konvektionsbarrieren und des Durchmessers der Blendenöffnung erreichen, daß der Sensor bei Konzentrationen ≥4,5 ppm Phosgen oder ≥40 ppm Blausäure für beide Meßkomponenten eine Ansprechzeit ≤30 s bei einem Sensorsignal ≥150 nA aufweist.

Vorzugsweise wird bei einem im Bereich von 150 nA bis 170 nA liegenden Sensorsignal eine Alarmfunktion ausgelöst. Zu diesem Zweck wird das Sensorsignal verstärkt und mit einem vorgegebenen Schwellwert verglichen.

Im folgenden wird ein Ausführungsbeispiel der Erfindung anhand einer Zeichnung näher erläutert Der Simultansensor für COCL₂ und HCN besteht im wesentlichen aus der elektrochemischen Meßzelle 1, die, abgesehen von einer Öffnung 2 zum Gasraum, in einem Gehäuse 3 eingeschlossen ist Die Meßzelle 1 besteht aus einem Gelelektrolyt 4 und den Elektroden 5 und 6, die in Form eines Silberdrahtnetzes auf gegenüberliegende Oberflächen des Gelelektrolyten 4 aufgebracht sind. An der Meßelektrode 5 entsteht an den Kontaktflächen der gitterförmigen Silberelektrode mit dem Gelelektrolyt eine Dreiphasengrenze Elektrolyt/Elektrode/Gasraum. An dieser Dreiphasengrenze spielen sich beim Auftreffen der Meßgasmoleküle die elektrochemischen Reaktionen ab, die für die Erzeugung des Meßsignals verantwortlich sind. Die Meßelektrode 5 ist durch eine Blende 7 aus Polypropylen abgedeckt. Über den Querschnitt der Blendenöffnung 8 kann die Empfindlichkeit der Meßzelle 1 eingestellt und festgelegt werden.

Vor dem Eintrittsfenster 8 der Meßzelle 1 sind gasseitig eine Konvektionsbarriere 9 in Form einer 150 µm dicken PTFE-Folie mit einer Porengröße von 0,2 µm, ein als Filter dienendes Silbersieb 10 und anschließend wiederum eine Konvektionsbarriere 11 angeordnet. Der Luftleitwert der Folie 9 beträgt bei 20° C 47ml/s cm² bar. Das Silbersieb 10 wird also von den beiden PTFE-Folien eingeschlossen, wobei die äußere Konvektionsbarriere 11 der gasseitigen Öffnung 2 und die innere Konvektionsbarriere 9 dem durch die Blende 7 definierten Eintrittsfenster 8 der Meßzelle 1 zugewandt ist. Die zweite Konvektionsbarriere 11 besteht ebenfalls aus einer PTFE-Folie mit einer Dicke von 0,5 mm, einerPorengröße von 10 µm und einem Luftleitwert von 5 ml/s x cm² x bar. DasSilbersieb 10 dient zur Unterdrückung der Querempfindlichkeit gegenüber H₂S und besteht aus einem Silberdrahtgitter mit 1025 Maschen/cm². Die zweite Konvektionsbarriere 11 ist zwar nicht unbedingt erforderlich, erleichtert aber die Anpassung der Empfindlichkeiten und Ansprechzeiten für die beiden Meßkomponenten. Das zu untersuchende Gas diffundiert also bei dieser Anordnung nacheinander durch die Konvektionsbarriere 11, das Silbersieb 10, die Konvektionsbarriere 9 und durch die Eintrittsöffnung 8 an die Meßelektrode 5.

Es wurde empirisch gefunden, daß die Empfindlichkeit und die Ansprechzeit des Sensors für die beiden Meßkomponenten COCL₂ und HCN durch Abstimmung des Eintrittsfensterquerschnitts (8) und des Gasleitwerts der Konvektionsbarrieren 9 und 11 annähernd auf gleiche Werte gebracht werden können. Aufgrund dieser Maßnahmen konnte bei einer Begasung mit 4,8 ppm Phosgen einerseits und 44,5 ppm Blausäure anderseits bei einer Temperatur von 22°C ein Sensorsignal von 160 nA mit einer Ansprechzeit (Alarmtotzeit) ≤30 s erreicht werden. Damit sind bei diesem System die Voraussetzungen für eine reine Ja-/Nein-Aussage realisiert, die für ein Warngerät erforderlich sind. Mit Hilfe einer Auswerteelektronik wird das an den Elektroden 5 und 6 abgegriffene Sensorsignal (Meßzellensignal) verstärkt und mit einer fest vorgegebenen Alarmschwelle verglichen, bei deren Überschreiten ein entsprechender Ausgangspegel gesetzt wird, wodurch ein Alarmgeber (akustisch oder optisch) aktiviert wird. Hierfür geignete Schaltungen gehören zum Stand der Technik und brauchen daher in diesem Zusammenhang nicht näher erläutert zu werden.

Der Gelelektrolyt 4 besteht hier aus dem Polymer Polymethylmetacrylat, dem Lösungsmittel Propylencarbonat und den elektrolytischen Bestandteilen Benzoesäure und Natriumbenzoat mit einer Dotierung von Eisen(III)-sulfat. Meßzellenelektrolyten dieser Art sind z.B. aus DE 2 436 261 bekannt.

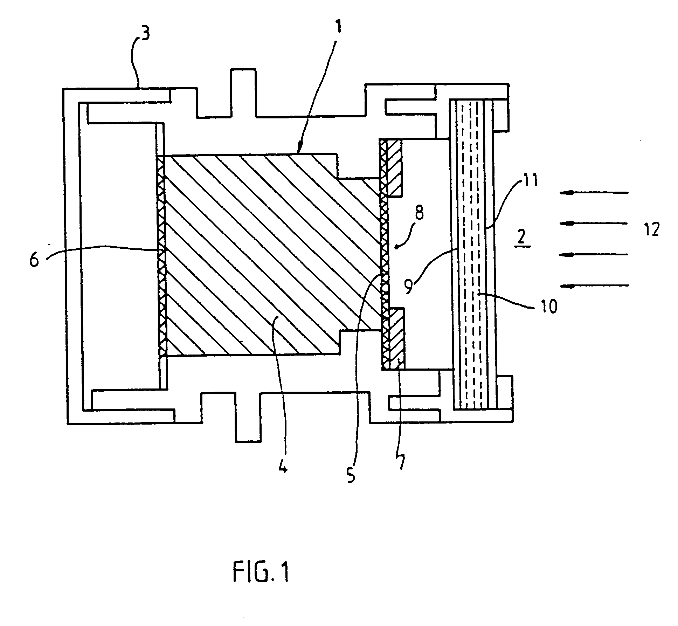

## Patentansprüche

1. Elektrochemischer Zweielektrodensensor mit einer organischen Gel-Elektrolytmeßzelle (1) für gasförmige Meßkomponenten (12) und einem vorgeschalteten für die Meßkomponenten (12) durchlässigen Filter (10), dadurch gekennzeichnet,
a) daß die Meßzelle (1) bei Einwirkung von mindestens 2 ppm Phosgen oder mindestens 15 ppm Blausäure ein Signal von mindestens 50 nA erzeugt,
b) daß eine Blende (7) die wirksame Elektrodenoberfläche an der Dreiphasengrenze Gasraum/Meßelektrode/Elektrolyt begrenzt und
c) daß der Blende (7) eine aus einer porösen Folie bestehende Konvektionsbarriere (9) und ein als Filter dienendes Silbersieb (10) vorgeschaltet sind, so daß die Meßkomponenten (12) zuerst durch das Silbersieb (10) und dann durch die Konvektionsbarriere (9) und die Blende (7,8) zu der Dreiphasengrenze diffundieren.

2. Sensor nach Anspruch 1, dadurch gekennzeichnet, daß dem Silbersieb (10) eine weitere Konvektionsbarriere (11) vorgeschaltet ist.

3. Sensor nach Anpruch 1 bis 2, dadurch gekennzeichnet, daß der Sensor bei Konzentrationen ≥4,5 ppm Phosgen oder ≥40 ppm Blausäure für beide Meßkomponenten eine Ansprechzeit ≤30 s bei einem Sensorsignal ≤150 nA aufweist.

4. Sensor nach Anspruch 3, dadurch gekennzeichnet, daß bei einem im Bereich von 150 nA - 170 nA liegenden Sensorsignal nach Verstärkung und durch Vergleich mit einem vorgegebenen Schwellwert eine Alarmfunktion ausgelöst wird.

## Claims

1. Electrochemical sensor with two electrodes and a measuring cell (1) comprising an organic gel electrolyte for gas-like measuring components (12) and including a filter (10) upstream of said cell, which filter is permeable for said measuring components, **characterized** in that
a) the measuring cell (1) under the influence of at least 2 ppm phosgene (COCl₂) or at least 15 ppm hydrocyanic acid (HCN) generates a signal of at least 50 nA;
b) an aperture (7) limits the effective surface of the electrodes at the three-phase boundary of gas chamber/measuring electrode/electrolyte; and
c) a convection barrier (9) consisting of a porous foil, and a silver sieve (10), forming a filter are located upstream of the aperture (7), so that the measuring components (12) first diffuse through the silver sieve (10) and thereafter through the convection barrier (9) and through the aperture (7, 8) to the three-phase boundary.

2. The sensor of claim 1, whereat a further convection barrier (11) is provided upstream ofthe silver sieve (10).

3. The sensor of claim 1 or 2, whereat the sensor at concentrations of ≥4.5 ppm phosgene or ≥40 ppm hydrocyanic acid has for both measuring components a response time of ≤30 s with a sensor signal of ≥150 nA.

4. The sensor of claim 3, **characterized in that**, if the sensor signal is within the range of 150 nA to 170 nA, said sensor signal is amplified and is compared with a predetermined threshold value for generating an alarm function.

## Revendications

1. Capteur électrochimique à deux électrodes comportant une cellule de mesure électrolytique formée d'un gel organique (1) pour des constituants gazeux à mesurer (12) et un filtre (10) installé en amont et laissant passer les constituants à mesurer (12), caractérisé en ce
a) que la cellule de mesure (1) produit un signal d'au moins 50 nA dans le cas de l'action d'au moins 2 ppm de phosgène ou d'au moins 15 ppm d'acide cyanhydrique,
b) qu'un diaphragme (7) limite la surface active de l'électrode au niveau de l'interface triphasique: espace contenant le gaz/électrode de mesure/électrolyte, et
c) qu'en amont du diaphragme (7) sont montés une barrière contre la convection (9), constituée d'une feuille poreuse, et un tamis en argent (10) servant de filtre, de sorte que les constituants à mesurer (12) diffusent tout d'abord à travers le tamis en argent (10), puis à travers la barrière contre la convection (9) et à travers le diaphragme (7,8) en direction de la limite triphasique.

2. Capteur selon la revendication 1, caractérisé en ce qu'une autre barrière contre la convection (11) est disposée en amont du tamis en argent (10).

3. Capteur selon les revendications 1 et 2, caractérisé en ce que pour des concentrations ≥ 4,5 ppm de phosgène ou ≥ 40 ppm d'acide cyanhydrique pour les deux constituants à mesurer, le capteur possède un temps de réponse ≤ 30 s pour un signal du capteur ≥ 150 mA.

4. Capteur selon la revendication 3, caractérisé en ce que pour un signal du capteur situé dans une gamme de 150 nA à 170 nA, une fonction d'alarme est déclenchée après amplification et par comparaison à une valeur de seuil prédéterminée.
